Europäisches Patentamt

European Patent Office

Office européen des brevets

(19)

(11) Publication number: **0 233 625 B1**

(12) ## EUROPEAN PATENT SPECIFICATION

(45) Date of publication of patent specification: **27.05.92**    (51) Int. Cl.⁵: **B25J 11/00**, B25J 18/00

(21) Application number: **87102166.3**

(22) Date of filing: **16.02.87**

(54) **Industrial robot.**

(30) Priority: **18.02.86 SE 8600725**

(43) Date of publication of application:
**26.08.87 Bulletin 87/35**

(45) Publication of the grant of the patent:
**27.05.92 Bulletin 92/22**

(84) Designated Contracting States:
**DE FR GB IT**

(56) References cited:
**EP-A- 0 180 560     WO-A-83/01222**
**GB-A- 1 568 248     SE-B- 412 877**
**US-A- 4 396 344     US-A- 4 466 307**
**US-A- 4 545 713**

(73) Proprietor: **ASEA AB**

**S-721 83 Västeras(SE)**

(72) Inventor: **Bergman, Mikael**
**Andebodavägen 307**
**S-175 43 Järfälla(SE)**
Inventor: **Kullborg, Ove**
**Fimbulvägen 10**
**S-722 31 Västeras(SE)**
Inventor: **Porsander, Thord**
**Pingstliljevägen 21**
**S-722 43 Västeras(SE)**

(74) Representative: **Boecker, Joachim, Dr.-Ing.**
**Rathenauplatz 2-8**
**W-6000 Frankfurt a.M. 1(DE)**

Rank Xerox (UK) Business Services

## Description

The invention relates to an industrial robot according to the precharacterising part of claim 1. Such a robot is previously known from the US-A 43 96 344.

Prior art robots of this so-called agile type are normally built up with arms journalled on one side only, resulting in a design with a large width and in limited accessibility and operability in narrow spaces.

In a robot known from the EP-A-180 560, the arms are double-sided journalled, and the drive member for the second arm consists of a ball screw, which results in a limitation of the working range of the robot.

In another prior art robot (US-A-4,545,713) having arms with double-sided journalling, the second arm is driven via steel cables. A disadvantage of this design is that the cables are stretched in dependence on the load, resulting in poor repetition accuracy of the robot.

The US-A-43 96 344 discloses a robot according to the introductory part of the present claim 1 where the motor for swinging the robot arm about its lower end and the motor for driving the crank to rotate the second arm via a link rod are attached to the lateral outer sides of the corresponding stand parts. Thus the robot has a relative great lateral width, and much space is required to accommodate the robot.

The invention aims at developing an industrial robot of the above-mentioned kind which exhibits a relatively small lateral extension, a very firm and solid journalling of the first arm structure between the stand parts, and an easy accessibility to the inner parts of the robot in case of repair.

To achieve this aim the invention suggests an industrial robot according to the introductory part of Claim 1, which is characterized by the features of the characterizing part of Claim 1.

Further developments of the invention are characterized by the features of the additional claims.

The new type of an agile robot according to the invention has an upper and a lower arm with double-sided bearings, the arms being pivotable in the same plane with a possibility of a large pivoting range of at least that arm which is supported in the stand. Especially characteristic of the industrial robot according to the invention is that the stand comprises two upright parts with an intermediate free space, in which the first arm is pivotably mounted, whereby the pivot shaft of the crank extends from one of the stand parts and through a lead-in opening in the first arm, whereas from the other stand part there extends a drive shaft which is substantially coaxially opposite to the pivot shaft of the crank, which drive shaft is connected to the first arm for pivoting this arm around the first horizontal axis.

In accordance with the invention, the first robot arm is double-sided journalled, namely, in the second stand part through two bearings which support the drive shaft of the arm, and in the first stand part through a support bearing which surrounds the pivot shaft of the crank. This latter support bearing is supported by a bearing support which is adjustably clampable to the first stand part. In this way, misalignment between the three bearings is avoided.

The invention will now be described in greater detail with reference to the accompanying drawings showing - by way of example - in

Figure 1    a side view of an industrial robot according to the invention,

Figure 2    a rear view of the robot in Figure 1,

Figure 3    a partially sectioned, enlarged view of the mounting of the lower arm of the robot to the stand,

Figure 4    various possible working positions and the working range of the robot in a vertical plane with the stand in a certain turning position about the vertical axis.

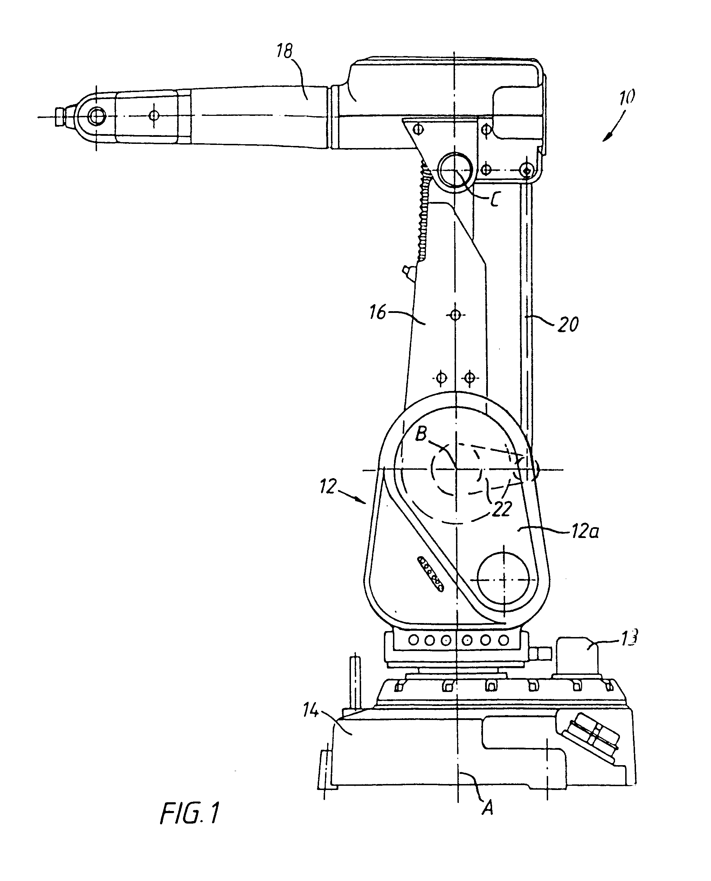

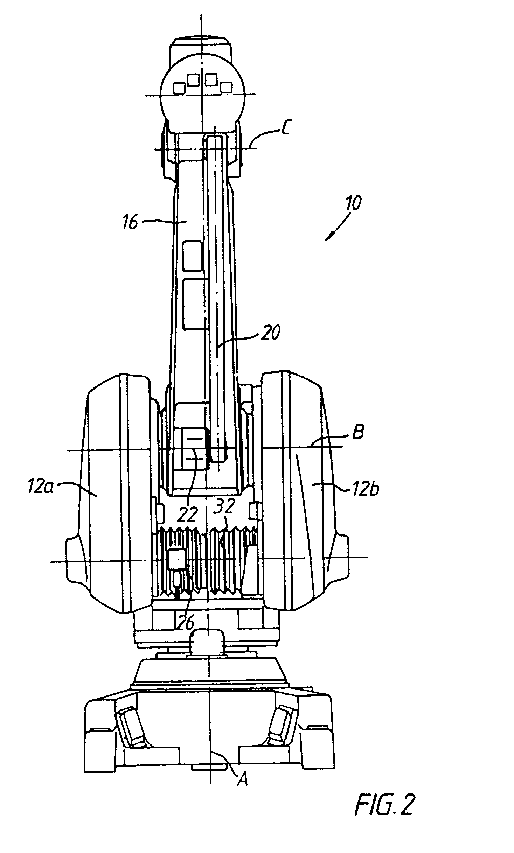

The industrial robot, generally designated 10 in Figure 1 and 2, comprises a stand 12, which by means of a motor 13 can be pivoted relative to a base plate 14 about a vertical axis A. The stand 12 consists of two separated, upright parts 12a and 12b, a first or lower arm 16 being pivotably journalled around an axis B between the upper portions of the stand parts 12a and 12b. To the upper end of the first arm 16a a second or upper arm 18 is connected pivotably around an axis C by means of a double-sided bearing. The pivoting of the arm 18 takes place in a manner known per se by means of a parallel link rod 20, which is articulately connected with one end to a driven crank 22 and with the other end to the rear part of the upper arm 18 thus forming a parallelogram in cooperation with the first arm.

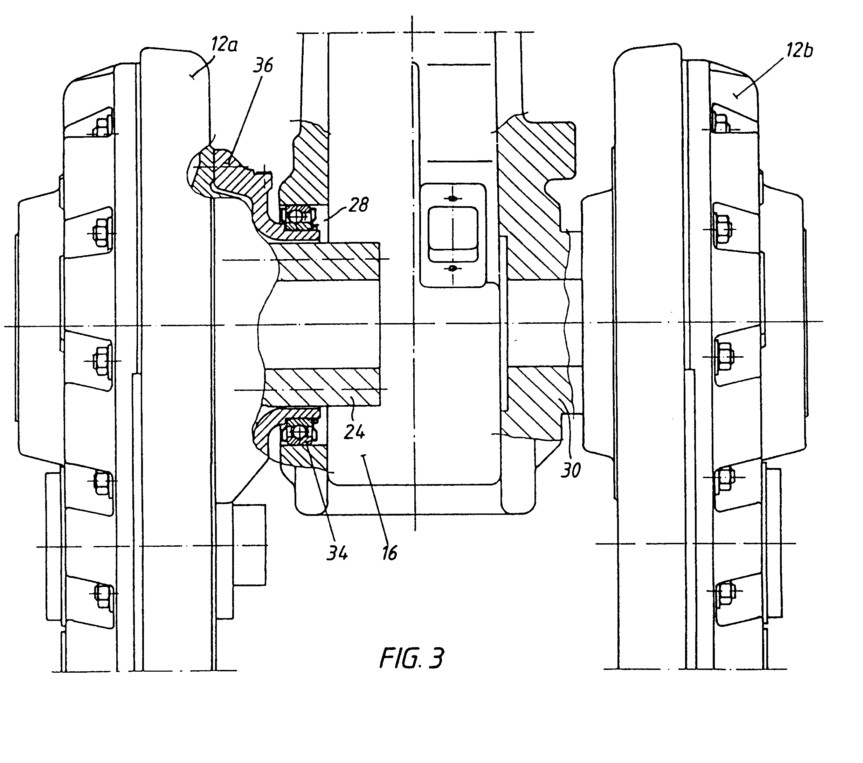

The crank 22 is fixedly connected to a shaft 24, which extends from the stand part 12a (see Figure 3) in which, via a gear wheel unit (not shown), the shaft 24 is driven by an electric motor 26 which is mounted in the lower portion of the stand part 12a and extends partially into the space between the stand parts 12a and 12b. The shaft 24 extends through a lead-in opening 28 in the lower part of the lower arm 16.

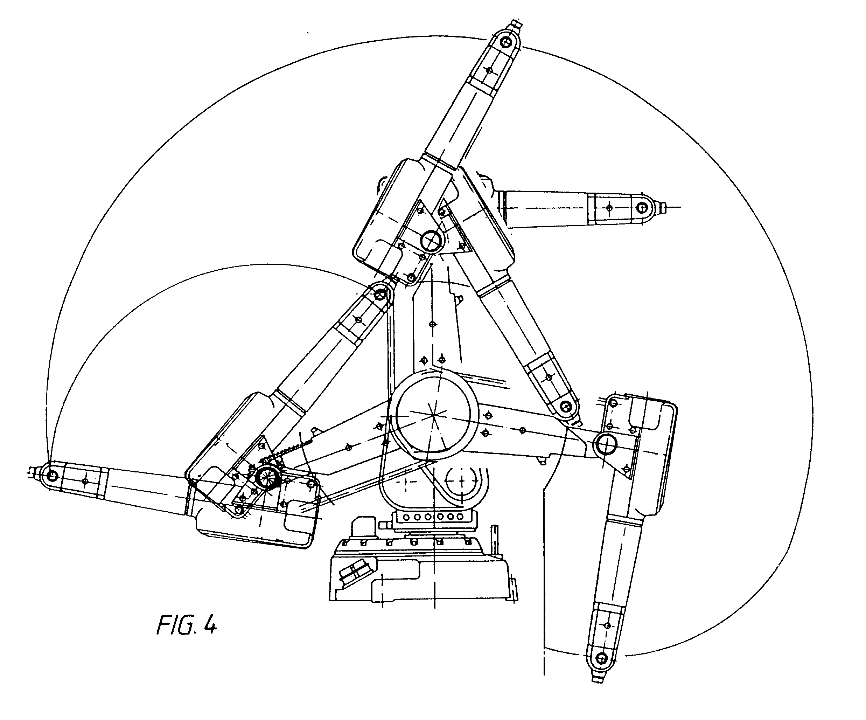

Substantially coaxially opposite to the shaft 24 there extends from the opposite stand part 12b a drive shaft 30, one end of which is fixedly connected to the lower arm 16 and which, via a gear unit (not shown), is driven by an electric motor 32 which is mounted in the lower section of the stand part 12b and which, in the same manner as motor 26, extends into the space between the stand parts 12a and 12b but is displaced horizontally relative to the motor 26. This location of the motors results in a relatively small total width of the robot, while at the same time the motors do not detrimentally limit the pivoting ability of the lower arm 16 or the parallel link rod 20, which is particularly clear from Figure 4, showing different feasible operating positions of the agile robot according to the invention.

The proposed suspension of the lower arm 16 from two opposed, mutually separated stand parts 12a and 12b makes possible an extremely stable double-sided journalling of the lower arm 16, the drive shaft 30 being journalled on two axially separated bearings (not shown) in the stand part 12b, the other side of the arm 16 being journalled on a bearing 34 which is supported in the lead-in opening 28 in the arm 16 by means of a bearing cage 36 adjustably fixed to the stand part 12a (see Figure 3).

In the embodiments of the robot according to the invention, described above, the position of the different axes and parts are related to an embodiment in which the robot is supported on a horizontal base. It is, of course, obvious to the person skilled in the art to apply other suitable ways of mounting, for example suspended mounting or lateral mounting.

## Claims

1. Industrial robot comprising:

   a stand (12) which is pivotable about a first axis (A) and comprises two upright stand parts (12a,12b) with an intermediate open space;

   a first arm (16) which at one end is pivotably arranged in said open space between the two stand parts about a second axis (B), which is perpendicular to said first axis;

   a second arm (18) which is pivotable at the other end of the first arm (16) about a third axis (C), which is parallel to said second axis;

   a link rod (20) arranged in parallel with the first arm (16), one end of said link rod being connected to the second arm (18) and the other end being articulately connected to a crank (22), the pivot shaft (24) of which is substantially coaxial with the second axis (B) and extends from said first stand part (12a) through a lead-in opening (28) in the first arm (16);

   a first drive member (13) for pivoting the stand (12) about the first axis (A);

a second drive member (32) for pivoting the first arm (16) about said second axis (B); and

a third drive member (26) connected to the pivot shaft (24) of said crank (22) for pivoting the second arm (18) via the link rod (20) about the third axis (C),

whereby the first arm (16) is fixedly mounted to a drive shaft (30), which extends from the second stand part (12b) perpendicular to the longitudinal axis of the first arm (16) and is substantially coaxially opposite to the pivot shaft (24) of the crank (22),

**characterized** in that the motors (32,26) of the second and third drive member are arranged with their axes parallel to the second axis (B) and extend into the open space between the upright parts (12a,12b) of the stand, that the first arm (16) is journalled in the second stand part (12b) through two bearings which support the drive shaft (30) connected to the first arm, and that the first arm (16b) is journalled in the first stand part (12a) through a bearing (34) which is supported by a bearing support (36) which is adjustably fixable to the first stand part (12a) in such a way that any misalignment between the bearings supporting said first arm (16) can be compensated for.

2. Industrial robot according to claim 1, **characterized** in that each of the electric motors (32,26) of the second and third drive members drives via an individual gear wheel the pivot shaft (24) of the crank (22) and the drive shaft (30) of the first arm (16), respectively.

3. Industrial robot according to claim 1 or 2, **characterized** in that the motors (32,26) are mutually displaced with respect to the longitudinal direction of their driving axes.

## Revendications

1. Robot industriel comprenant :
   un bâti (12) qui peut pivoter autour d'un premier axe (A) et qui comprend deux pièces de bâti verticales (12a, 12b) avec un espace ouvert intermédiaire;
   un premier bras (16) dont une extrémité est montée de façon pivotante dans l'espace ouvert précité, entre les deux pièces de bâti, de façon à pouvoir pivoter autour d'un second axe (B) qui est perpendiculaire au premier axe;
   un second bras (18) qui peut pivoter à l'autre extrémité du premier bras (16), autour d'un troisième axe (C) qui est parallèle au second axe;

une barre de transmission (20) qui est disposée parallèlement au premier bras (16), une extrémité de cette barre de transmission étant accouplée au second bras (18), tandis que son autre extrémité est reliée de façon articulée à une manivelle (22), cette manivelle ayant un axe de pivotement (23) qui coïncide pratiquement avec le second axe (B), et cet arbre s'étendant à partir de la première pièce de bâti (12a), à travers une ouverture de réception (28) dans le premier bras (16);

un premier organe d'entraînement (13) destiné à faire pivoter le bâti (12) autour du premier axe (A);

un second organe d'entraînement (32) destiné à faire pivoter le premier bras (16) autour du second axe (B); et

un troisième organe d'entraînement (26) accouplé à l'arbre de pivotement (24) de la manivelle (22), pour faire pivoter le second bras (18) autour du troisième axe (C), par l'intermédiaire de la barre de transmission (20),

le premier bras (16) étant monté de façon fixe sur un arbre d'entraînement (30), qui s'étend à partir de la seconde pièce de bâti (12b), perpendiculairement à l'axe longitudinal du premier bras (16) et qui est pratiquement coaxial à l'arbre de pivotement (24) de la manivelle (22), et est situé face à ce dernier, **caractérisé** en ce que les moteurs (32, 26) des second et troisième organes d'entraînement sont disposés avec leurs axes parallèles au second axe (B), et ils s'étendent dans l'espace ouvert qui se trouve entre les pièces verticales (12a, 12b) du bâti, en ce que le premier bras (16) est monté de façon pivotante dans la seconde pièce de bâti (12b) par l'intermédiaire de deux paliers qui supportent l'arbre d'entraînement (30) fixé au premier bras, et en ce que le premier bras (16) est monté de façon pivotante dans la première pièce de bâti (12a) par l'intermédiaire d'un palier (34) qui est supporté par un support de palier (36) pouvant être fixé de façon réglable à la première pièce de bâti (12a), d'une manière telle que l'on puisse compenser tout défaut d'alignement entre les paliers qui supportent le premier bras (16).

2. Robot industriel selon la revendication 1, **caractérisé** en ce que chacun des moteurs électriques (32, 26) des seconds et troisième organes d'entraînement entraîne, par l'intermédiaire d'une roue dentée individuelle, respectivement l'arbre de pivotement (24) de la manivelle (22), et l'arbre d'entraînement (30) du premier bras (16).

3. Robot industriel selon la revendication 1 ou 2, **caractérisé** en ce que les moteurs (32, 26) sont mutuellement décalés par rapport à la direction longitudinale de leurs axes d'entraînement.

## Patentansprüche

1. Industrie-Roboter

mit einem Ständer (12), der um eine erste Achse (A) drehbar ist und zwei aufrechte Ständerteile (12a, 12b) mit einem dazwischen vorhandenen freien Raum hat;

mit einem ersten Arm (16), der an einem Ende drehbar um eine zweite Achse (B), die senkrecht zu der ersten Achse verläuft, in dem genannten freien Raum zwischen den beiden Ständerteilen angeordnet ist;

mit einem zweiten Arm (18), der um eine dritte Achse (C), welche parallel zu der zweiten Achse verläuft, drehbar an dem anderen Ende des ersten Armes (16) angeordnet ist;

mit einer Verbindungsstange (20), die parallel zu dem ersten Arm (16) angeordnet ist, wobei ein Ende der Verbindungsstange mit dem zweiten Arm (18) verbunden ist und das andere Ende gelenkig mit einem Kurbelarm (22) verbunden ist, dessen Drehwelle (24) im wesentlichen koaxial mit der zweiten Achse (B) verläuft und sich von dem ersten Ständerteil (12a) aus durch eine Einführöffnung (28) in den ersten Arm (16) hinein erstreckt,

mit einem ersten Antriebsglied (13) zur Drehung des Ständers (12) um die erste Achse (A);

mit einem zweiten Antriebsglied (32) zur Drehung des ersten Armes (16) um die zweite Achse (B); und

mit einem dritten Antriebsglied (26), welches an der Drehwelle (24) für den genannten Kurbelarm (22) angeschlossen ist zur Drehung des zweiten Armes (18) über die Verbindungsstange (20) um die dritte Achse (C),

wobei der erste Arm (16) fest auf einer Antriebswelle (30) montiert ist, die sich von dem zweiten Ständerteil (12b) senkrecht zu der Längsachse des ersten Armes (16) erstreckt und im wesentlichen koaxial gegenüber der Drehwelle (24) des Kurbelarmes (22) liegt,

**dadurch gekennzeichnet,** daß die Motoren (32, 26) des zweiten und dritten Antriebsgliedes mit ihren Achsen parallel zur zweiten Achse (B) angeordnet sind und sich in den offenen Raum zwischen den beiden aufrechten Teilen (12a, 12b) des Ständers erstrecken, daß der erste Arm (16) drehbar im zweiten Ständerteil (12b) mittels zweier Lager gelagert ist, welche die Antriebswelle (30) tragen, die mit dem ersten Arm verbunden ist, und daß der erste Arm (16b) drehbar im ersten Ständerteil (12a) mittels eines Lagers (34) gelagert ist, welches von einem Lagerträger (36) getragen wird, der derart justierbar an dem ersten Ständerteil (12a) befestigt ist, daß ein mangelndes Fluchten zwischen den Lagern, die den ersten Arm (16) tragen, kompensiert werden kann.

2. Industrie-Roboter nach Anspruch 1, **dadurch gekennzeichnet,** daß jeder der Elektromotoren (32, 26) des zweiten und dritten Antriebsgliedes über ein individuelles Getrieberad die Drehwelle (24) des Kurbelarms (22) beziehungsweise die Antriebswelle (30) des ersten Armes (16) antreibt.

3. Industrie-Roboter nach Anspruch 1 oder 2, **dadurch gekennzeichnet,** daß die Motoren (32, 26) gegeneinander in bezug auf die Längsrichtung ihrer Antriebsachsen versetzt sind.

FIG.1

FIG.2

FIG. 3

FIG. 4